# EUROPÄISCHE PATENTSCHRIFT

(11) **EP 2 834 486 B1**
(45) Veröffentlichungstag und Bekanntmachung des Hinweises auf die Patenterteilung: **11.05.2016**
(21) Anmeldenummer: 13707135.3
(22) Anmeldetag: 19.02.2013
(51) Int. Cl.: F01N 3/20, F01N 3/28

(54) **KÜHLVORRICHTUNG FÜR ANSCHLUSSSTÜCK**
COOLING DEVICE FOR A FLUID COUPLING
DISPOSITIF DE REFROIDISSEMENT POUR CONNECTEUR À FLUID

(30) Priorität: 03.04.2012 DE 102012205389
(43) Veröffentlichungstag der Anmeldung: 11.02.2015
(73) Patentinhaber: Robert Bosch GmbH, 70442 Stuttgart (DE)
(72) Erfinder: KIONTKE, Martin, 71254 Ditzingen (DE); POHL, Stephan, 71701 Schwieberdingen (DE); KNITTEL, Wolfgang, 71254 Ditzingen (DE); WINKLER, Jochen, 73730 Esslingen (DE)
(86) Internationale Anmeldenummer: PCT/EP2013/053270
(87) Internationale Veröffentlichungsnummer: WO 2013/149759

(56) Entgegenhaltungen:
- WO-A1-03/084647
- US-A1- 2011 192 140

## Beschreibung

### Stand der Technik

DE 44 36 397 A1 bezieht sich auf eine Einrichtung zum Nachbehandeln von Abgasen. Es wird eine Einrichtung zum Nachbehandeln von Abgasen einer selbstzündenden Verbrennungskraftmaschine offenbart, bei der zur Verbesserung der Arbeitsweise eines reduzierenden Katalysators ein Reduktionsmittel, in das dem Katalysator zugeführte Abgas eingegeben wird. Die Eingabe des Reduktionsmittels erfolgt dabei über ein elektrisch gesteuertes Dosierventil, das in einem gemeinsamen Gehäuse mit einem Steuerventil kombiniert ist. Dieses Steuerventil dient der gesteuerten Einbringung von zugeführter Druckluft, in der eine über das Dosierventil vorgegebene Menge von Reduktionsmittel aufbereitet und anschließend intermittierend in das Abgas eingegeben wird. Dies dient insbesondere zur Vermeidung von Hamstoffablagerungen und Verklebungen an Dosierventil und Steuerventil neben der optimalen Aufbereitung des eingebrachten Reduktionsmittels.

DE 198 56 366 C1 bezieht sich auf eine Vorrichtung und ein Verfahren zum Nachbehandeln von Abgasen einer mit Luftüberschuss arbeitenden Verbrennungskraftmaschine. Es wird eine Vorrichtung zum Nachbehandeln von Abgasen vorgeschlagen, die einen zur Reduktion von NOₓ - Bestandteilen im Abgas dienenden Reduktionskatalysator umfasst. Ferner umfasst die Vorrichtung eine elektrisch ansteuerbare Dosiereinrichtung zum gesteuerten Einbringen von Reduktionsmittel in einer Abgasleitung stromauf des Reduktionsmittelkatalysators sowie eine Einrichtung zum Kühlen der Dosiereinrichtung. Die Dosiereinrichtung umfasst ein Einspritzventil, das von einem unmittelbar mit der Abgasleitung verbundenen doppelwandigen Ventilaufnahmekörper umfasst ist. Desweiteren umfasst die Dosiereinrichtung eine Drucklufterzeugungseinrichtung, die Druckluft in einen Luftspalt zwischen einer Außenwandung und einer Innenwandung des Ventilaufnahmekörpers zum Kühlen zumindest der abgasnahen Teile des Einspritzventiles einbläst.

DE 10 2012 201 203 betrifft ein wassergekühltes Dosiermodul zum Eindosieren eines Reduktionsmittels in einen Abgastrakt einer Verbrennungskraftmaschine. Das Dosiermodul umfasst mindestens einen Kühlkörper, der von einem Kühlfluid, das der Kühlung der Verbrennungskraftmaschine dienen kann, durchströmt ist. Im oberen Bereich des Dosiermoduls befindet sich eine elektrische Kontaktierung. Das Dosiermodul ist von einer Volleinhausung umschlossen. Die Volleinhausung umfasst einen oberen und einen unteren Kühlkörper, die von einer gerichteten Kühlfluidströmung ausgehend vom Ventilspitzenbereich in Richtung der elektrischen Kontaktierung durchströmt werden.

US 2011/0192140 betrifft einen Reagenzmittelinjektor mit einem Rücklaufanschluss für das Reagenzmittel.

Um mit der Ventilspitze des Dosiermodules so nah wie möglich an den Abgasstrom zu gelangen, wird in den Dosiermodulen die Ventilaufnahme aktiv gekühlt. Dies geschieht durch einen Anschluss des Kühlkörpers beispielsweise an den Kühlmittelkreislauf des Fahrzeugs. Dadurch wird sichergestellt, dass auch bei abgasnaher Positionierung des Dosiermodules die Temperatur der Ventilspitze im Betrieb nicht über 120°C ansteigt. Konzeptbedingt ist jedoch ein Anschlussstück des Dosiermodules, über welches diesen das einzudosierende Betriebs-/Hilfsmedium, so zum Beispiel Harnstoffwasserlösung oder Harnstoff oder dergleichen, zuströmt, der Umgebungstemperatur ausgesetzt. In kritischen Betriebszuständen, so zum Beispiel bei hohen äußeren Umgebungstemperaturen in Betrieb oder bei Heißabstell-Vorgängen, kann sich dieses Anschlussstück in unerwünschter Weise aufheizen und dadurch Wärme in das Innere des Dosiermoduls eintragen. Der konzeptbedingt exponiert liegende Anschlussstückbereich ist hinsichtlich einer Aufheizung des Dosiermodules sehr kritisch.

### Darstellung der Erfindung

Erfindungsgemäß wird das Anschlussstück des Dosiermodules zum Eindosieren eines Betriebs-/Hilfsstoffes in den Abgastrakt einer Verbrennungskraftmaschine, so zum Beispiel Harnstoffwasserlösung (HWL), Harnstoff oder dergleichen, aktiv gekühlt. Dies kann beispielsweise dadurch erreicht werden, dass das Anschlussstück, bei dem es sich beispielsweise um ein Spritzgussbauteil handeln kann, doppelwandig ausgebildet wird, sodass das ein- oder mehrteilig ausgebildete Anschlussstück - in der Regel als Kunststoffspritzgussteil gefertigt - von einem Kühlmedium durchströmt wird, d.h. eine durch das ein- oder zweiteilig ausgebildete Anschlussstück verlaufende Zuleitung für das Reduktionsmittel von einer Kühlfluidströmung ummantelt wird. Dadurch lassen sich in vorteilhafter Weise die im Betrieb aufgenommenen Wärmemengen des ein oder mehrteilig ausgebildeten Anschlussstückes über den Kühlkreislauf vom Dosiermodul abführen. Zusätzlich wird durch die erfindungsgemäß vorgeschlagene aktive Kühlung des ein oder mehrteilig ausgebildeten Anschlussstückes und das Vorhandensein eines Kühlfluidmantels innerhalb des Anschlussstückes die thermische Masse des Dosiermodules erhöht, wodurch sich ein trägeres Aufheizverhalten im Abstellfall ergibt. Dadurch kann insbesondere einer unerwünschten schlagartigen Aufheizung des Dosiermodules entgegengewirkt werden, wie es bei als "Heißabstellern" bezeichneten Abschaltvorgängen von Verbrennungskraftmaschinen kommen kann

Beide Effekte, d.h. die aktive Kühlung sowie die Erhöhung der thermischen Masse des Dosiermodules verringern die eingetragene Wärmemenge in das Innere des Dosiermodules erheblich und verhindern somit unzulässige Temperaturüberschreitungen an kritischen Bauteilen wie beispielsweise zur Dichtung eingesetzte O-Ringen oder auch Filterkörpern.

### Vorteile der Erfindung

Durch die erfindungsgemäß vorgeschlagene aktive Kühlung des Anschlussstückes, welches ein- oder mehrteilig ausgebildet sein kann, kann sowohl das dem Dosiermodul zugeführte Reduktionsmittel, bei dem es sich in der Regel um eine Harnstoffwasserlösung beziehungsweise oder einem anderen Betriebs-/Hilfsstoff handeln kann, selbst gekühlt werden, ebenso wie das Dosiermodul selbst, dem durch die erfindungsgemäß vorgeschlagene Lösung bereits ein abgekühlter Strom des Betriebs-/Hilfsmittels zugeführt werden kann. Durch die ein- oder zweiteilige Auslegung des Anschlussstückes kann in vorteilhafter Weise erreicht werden, dass auch die thermische Masse des Dosiermodules erhöht wird, so dass dessen Aufheizcharakteristik träger ist, was insbesondere bei "Heißabstellem" von Vorteil ist. Wird das ein- oder mehrteilig ausgebildete Anschlussstück aktiv gekühlt, lässt sich auch eine höhere Wärmemenge aus dem oberen Bereich des Dosiermodules ableiten beziehungsweise die in diesem Bereich eingetragene Wärmemenge erheblich reduzieren.

Ein weiterer Vorteil des erfindungsgemäß vorgeschlagenen Dosiermodules ist darin zu erblicken, dass der aktiv gekühlte Anschlussstutzen ein- oder auch mehrteilig ausgebildet werden kann. Für den Fall, dass der aktiv gekühlte Anschlussstutzen einteilig ausgebildet ist, kann dieser beispielsweise als Kunststoffspritzgussteil gefertigt werden, wobei die Reduktionsmittellleitung im aktiv gekühlten Anschlussstutzen von einer diese zumindest teilweise ummantelnden Kühlfluidleitung umgeben ist. Als Kühlfluid kann in vorteilhafter Weise entweder ein separates Kühlfluid, der Kraftstoff der Verbrennungskraftmaschine, das Reduktionsmittel selbst oder auch das Kühlfluid der Verbrennungskraftmaschine eingesetzt werden. Wird der erfindungsgemäß vorgeschlagene aktiv gekühlte Anschlussstutzen im Gegenstromprinzip durchströmt, d.h. strömen Reduktionsmittel und Kühlfluid gegenläufig zueinander, so lässt sich ein besonders guter Wärmeaustausch, d.h. eine besonders gute Wärmeabfuhr aus dem Dosiermodul erreichen.

Ein weiterer Vorteil der erfindungsgemäß vorgeschlagenen Lösung ist darin zu erblicken, dass für den Fall, dass der aktiv gekühlte Anschlussstutzen zweiteilig ausgebildet ist, der Kunststoffkörper mit einem metallischen Anschlussrohr stoffschlüssig gefügt werden kann, sodass beim Automobilhersteller das erfindungsgemäß vorgeschlagene Dosiermodul in jeweils modellspezifischen Einbaupositionen - je nach zur Verfügung stehenden Bauraumeingebaut werden kann.

Diesen Umstand Rechnung tragend, besteht die Möglichkeit, den erfindungsgemäß vorgeschlagenen aktiv gekühlten Anschlussstutzen mit einem Schnappverschluss oder einer Verrastung auszustatten. Diese erlaubt eine Montage des erfindungsgemäß vorgeschlagenen aktiv gekühlten Anschlussstutzens in unterschiedlichen Umfangspositionen, die herstellerabhängig in unterschiedlichen Winkellagen liegen können.

Die Befestigung des aktiv gekühlten Anschlussstutzens kann durch die Verrastungsmöglichkeit beziehungsweise durch Ausbildung eines Schnappverschlusses so gestaltet, dass das Dosiermodul im Servicefall auch wieder leicht zugänglich ist und eine beispielsweise stoffschlüssig hergestellte Verbindung nicht wieder aufwendig zu zerstören wäre.

Der erfindungsgemäß vorgeschlagene aktiv gekühlte Anschlussstutzen - sei er einteilig, sei er mehrteilig ausgebildet - umfasst einen Kunststoffkörper, der als Kunststoffspritzgussteil gefertigt ist Durch diese Herstellungstechnik besteht ein relativ großer Freiheitsgrad hinsichtlich der Ummantelung der Reduktionsmittelleitung durch die Kühlfluidleitung. In einer möglichen Ausgestaltungsvariante kann die Kühlfluidleitung die Reduktionsmittelleitung, vollständig, d.h. um 360° umgeben, d.h. diese vollständig ummanteln. Es besteht jedoch auch die Möglichkeit, dass der im Wesentlichen ringförmig ausgebildete Strömungskanal für das Kühlfluid die koaxial zu diesem verlaufende Reduktionsmittelleitung nur teilweise, so beispielsweise um 180° oder um 270° oder um beliebige andere dieser Größenordnung liegende Winkelbereiche umgibt.

Durch den Einsatz einer direkten Kontaktierung einer Druckleitung an das Dosierventil, beispielsweise mittels eines Schnappverschlusses, kann eine ansonsten erforderliche Dichtstelle entfallen. Durch Entfall der Dichtstelle lässt sich die Robustheit der Kontaktierung zwischen der Druckleitung und dem Dosierventil erheblich steigern, ferner kann durch den Entfall eines ansonsten erforderlichen Stutzens Gewicht eingespart werden, nicht zuletzt ist die erfindungsgemäß vorgeschlagene direkte Kontaktierung der Druckleitung mit dem Dosierventil mit einer erheblichen Kosteneinsparung verbunden.

### Kurze Beschreibung der Zeichnungen

Anhand der Zeichnungen wird die Erfindung nachstehend eingehender beschrieben.

Es zeigt:
- Figur 1: ein Dosiermodul mit einem einteilig ausgebildeten, aktiv gekühlten Anschlussstutzen,
- Figur 2: eine weitere Ausführungsvariante des aktiv gekühlten Anschlussstutzens in zweiteiliger Ausführungsform und
- Figur 3: einen Schnitt durch den Kunststoffkörper des aktiv gekühlten Anschlussstutzens aufgenommen an einem Dosierventil.

### Ausführungsvarianten

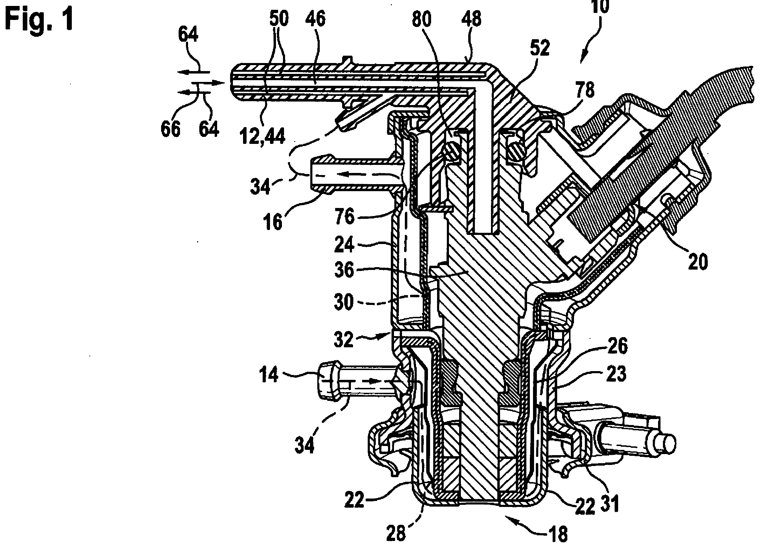

Figur 1 zeigt eine erste Ausführungsvariante eines aktiv gekühlten Anschlussstutzens zur Aufnahme an einem Dosierventil zum Einsatz an Verbrennungskraftmaschinen.

Das nachstehend beschriebene Dosiermodul 10 wird insbesondere zum Eindosieren eines Reduktionsmittels in einen Abgastrakt einer Verbrennungskraftmaschine eingesetzt. Bei einem Reduktionsmittel kann es sich um ein Betriebs-/Hilfsstoff handeln, wie beispielsweise einer Hamstoffwasserlösung, einer Harnstofflösung, wie sie unter dem Handelsnamen AdBlue^{®} heute weit verbreitet eingesetzt wird.

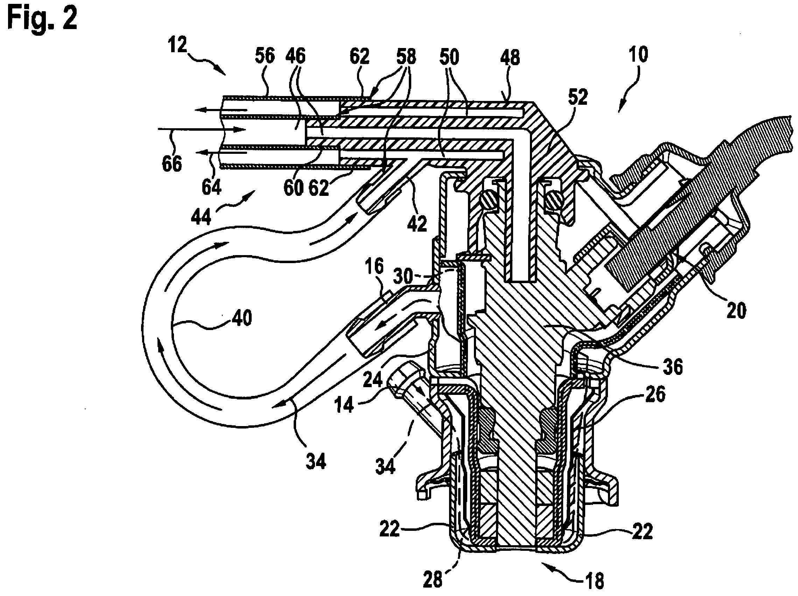

Der Darstellung gemäß Figur 1 ist zu entnehmen, dass ein Dosiermodul 10 zum Eindosieren eines Reduktionsmittels in den Abgastrakt einer Verbrennungskraftmaschine einen Reduktionsmittelzulauf 12 umfasst, der erfindungsgemäß als aktiv gekühlter Anschlussstutzen 44 ausgebildet ist. Das Dosiermodul 10 umfasst des Weiteren einen im unteren Bereich des Dosiermoduls 10 angeordneten Kühlfluidzulauf 14. Über den Kühlfluidzulauf 14 strömt Kühlfluid in das Innere des Dosiermodules 10 zur Beaufschlagung mindestens eines Kühlkörpers 22 beziehungsweise 24 ein. Bei dem Kühlfluid kann es sich beispielsweise um das Kühlfluid, d.h. die Kühlflüssigkeit einer Verbrennungskraftmaschine, um Kraftstoff, um das Reduktionsmittel selbst oder um ein anderes Fluid handeln, welches, wie in Figur 1 dargestellt, mit seiner relativ niedrigen Temperatur einer Ventilspitze 18 des Dosiermodules 10 zuströmt. An der den sehr hohen Temperaturen im Abgastrakt einer Verbrennungskraftmaschine ausgesetzten Ventilspitzenbereich 18 treten die höchsten Temperaturen, sodass an diesem Bereich die größte Kühlung notwendig ist. Das über den Kühlfluidzulauf 14 zuströmende Kühlfluid strömt einem unteren Kühlkörper 22 zu, an dessen Mantelfläche ein verdrehbarer Flansch 23 aufgenommen ist Der verdrehbare Flansch 23 nimmt den Kühlfluidzulauf 14 auf, sodass dessen Umfangslage in Bezug auf den unteren Kühlkörper 22 variierbar ist. Im unteren Kühlkörper 22 befindet sich ein Strömungsleitblech 26 sowie eine Öffnung, über welche das der Ventilspitze 18 zuströmende Kühlfluid als gerichtete Kühlfluidstnömung 34 in einen weiteren, d.h. den oberen Kühlkörper 24 überströmt. Untere gekühlte Flächen sind mit Bezugszeichen 28 im Bereich des unteren Kühlkörpers 22 bezeichnet, während obere gekühlte Flächen mit Bezugszeichen 30 bezeichnet sind, die sich im oberen Kühlkörper 24 des erfindungsgemäß vorgeschlagenen Dosiermoduls 10. Ausgehend von den oberen gekühlten Flächen 30 strömt die gerichtete Kühlmittelströmung 34 einem Kühlfluidrücklauf 16, der in der in Figur 1 dargestellten Ausführungsvariante am oberen Kühlkörper ausgebildet ist - gestrichelt ist angedeutet, wie die den Kühlfluidrücklauf 16 verlassende gerichtete Fluidströmung 34 einem seitlich am aktiv gekühlten Anschlussstutzen 44 ausgebildeten Einmündungsstutzen 42 zuströmt (vergleiche auch Darstellung gemäß Figur 2).

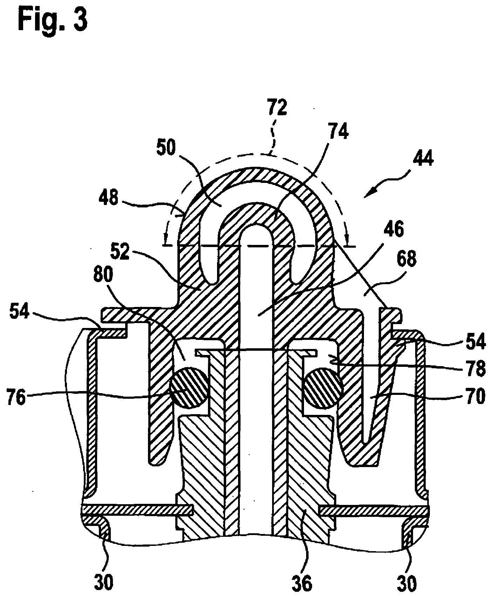

In der in Figur 1 dargestellten Ausführungsvariante ist der aktiv gekühlte Anschlussstutzen 44 einstückig ausgebildet und umfasst ein seitlich von einem Kunststoffkörper 52 abzweigenden Reduktionsmittelzulauf 12. Dieser ist beispielsweise im Wege des Kunststoffspritzgussverfahrens gefertigt und mittels einer in Figur 1 nicht näher dargestellten Rastverbindung beziehungsweise einem Schnappverschluss auf der Oberseite des Dosiermoduls 10 lösbar befestigt (vergleiche Darstellung gemäß Figur 3).

Figur 1 zeigt des Weiteren, dass der aktiv gekühlte Anschlussstutzen 44 eine Reduktionsmittelleitung 46 umfasst, über die Reduktionsmittel, beispielsweise eine Harnstoffwasserlösung (HWL) oder Harnstoff dem Dosierventil 36 zuströmt Koaxial zur Reduktionsmittelleitung 46 erstreckt sich durch den aktiv gekühlten Anschlussstutzen 44 eine Kühlfluidleitung 50, die die Reduktionsmittelleitung 46 mantelförmig zumindest teilweise umschließt. Durch den bereits erwähnten seitlich an einer Mantelfläche 48 des aktiv gekühlten Anschlussstutzens 44 angespritzten Einmündungsstutzen 42 strömt die gerichtete Kühlmittelströmung 34, aus dem Reduktionsmittelrücklauf 16 austretend dem Anschlussstutzen 44 zu. Ein Vergleich der Strömungsrichtung 64, 66 für das Reduktionsmittel und das Kühlfluid zeigt, dass diese beiden Fluide im aktiv gekühlten Anschlussstutzen 44 gemäß des Gegenstromprinzips durchströmen, wodurch ein sehr guter Wärmeübergang überreicht wird. Je dünner eine Trennwand zwischen der Reduktionsmittelleitung 46 und der diese zumindest teilweise umgebenden Kühlfluidleitung 50 gestaltet werden kann, eine desto bessere Wärmeabfuhr kann durch die erfindungsgemäß vorgeschlagene aktive Kühlung des Anschlussstutzens 44 am Dosiermodul 10 erreicht werden.

Figur 1 zeigt des Weiteren, dass am Kunststoffkörper 52 ein Hohlraum 80 ausgebildet ist. Dieser Hohlraum 80 des aktiv gekühlten Anschlussstutzens 44 dient der Aufnahme dieses Bauteiles am oberen Ende des Dosierventiles 36. Zur Realisierung einer Abdichtung zwischen dem Dosierventil 36 des Dosiermodules 10 und dem Kunststoffkörper 52 des aktiv gekühlten Anschlussstutzens 44 ist ein ringförmig ausgebildetes Dichtelement 76 dargestellt Dieses liegt mit seiner Innenseite einerseits an einem Hals des Dosierventiles 36 an, indem dieses mit einem verringerten Durchmesser ausgebildet ist Des Weiteren liegt das ringförmig ausgebildete Dichtelement 76 an einer Innenwand 78 des Kunststoffkörpers 52 an, sodass bei Montage des Kunststoffkörpers 52 das ringförmig ausgebildete Dichtelement 76 elastisch verformt wird und sich die Abdichtwirkung einstellt.

Aus Figur 2 geht eine weitere Ausführungsmöglichkeit des erfindungsgemäß vorgeschlagenen aktiv gekühlten Anschlussstutzens im Detail hervor. Im Unterschied zur Darstellung gemäß Figur 1, in der der aktive gekühlte Anschlussstutzen 44 als einteiliges Bauelement, das vorzugsweise als Kunststoffspritzgussbauteil gefertigt ist, ist das in Figur 2 dargestellte Ausführungsbeispiel mehrteilig ausgebildet. Der aktive gekühlte Anschlussstutzen 44 umfasst in dieser Ausführungsvariante den Kunststoffkörper 52, der im oberen Bereich des Dosierventiles 36 aufgenommen ist - analog zur in Figur 1 dargestellten Ausführungsvariante.

In der in Figur 2 dargestellten Ausführungsvariante ist mit dem Kunststoffkörper 52 des aktiv gekühlten Anschlussstutzens 44 ein Anschlussrohr 56 gefügt. Bei dem Anschlussrohr 56 kann es sich beispielsweise um die Automobilhersteller seitig vorgegebene Versorgungsleitung für das Reduktionsmittel handeln, die beispielsweise als metallisches Rohr oder auch als geeignete Kunststoffleitung ausgebildet ist Figur 2 zeigt, dass der Kunststoffkörper 52 und das Anschlussrohr 56 durch stoffschlüssige Verbindungen 58 miteinander verbunden sind. Die stoffschlüssigen Verbindungen 58 sind insbesondere als umlaufend verlaufende Schweißnähte ausgebildet und umfassen eine Innenverbindung 60, an welchem die Abschnitte der Reduktionsmittelleitung 46 im Anschlussrohr 56 und im Kunststoffkörper 52 miteinander verbunden werden, während an einer Außenverbindung 62 die jeweiligen Abschnitte der Kühlfluidleitung 50 im Anschlussrohr 56 und im Kunststoffkörper 52 stoffschlüssig miteinander gefügt sind. Eine stoffschlüssige Verbindung 58, insbesondere eine Schweißung, wird auch zwischen einem Schlauchabschnitt einer Schlauchverbindung und einem Einmündungsstutzen 42 hergestellt, über welche das am Kühlfluidrücklauf 16 als gerichtete Kühlfluidströmung 34 den oberen Kühlkörper 24 verlassende Kühlfluid dem aktiv gekühlten Anschlussstutzen 44 gemäß der Darstellung in Figur 2 zuströmt.

Das über den Kühlfluidzulauf 14 dem unteren Kühlkörper 22 zuströmende Kühlfluid strömt in den oberen Kühlkörper über, tritt von dort über den Kühlfluidrücklauf 16 in einen extern im Bezug auf das Dosiermodul 10 verlaufenden Schlauchabschnitt 40 ein. Neben einer extern verlaufenden Verschlauchung besteht auch die Möglichkeit, eine Übergabestelle des Kühlfluides vom Körper des Dosiermoduls in den Anschlussstutzen mittels einer internen Übergabestelle auszubilden, die jedoch zeichnerisch im Einzelnen nicht dargestellt ist.

Die gerichtete Kühlfluidströmung 34 strömt nach Passage des beispielsweise einen 270°-Kreisbogen beschreibenden Schlauchabschnittes, dem seitlich an den Kunststoffkörper 52 angespritzten Einmündungsstutzen 42 zu und in die Kühlfluidleitung 50 des aktiv gekühlten Anschlussstutzens 44 ein. Durch die gewählte Position der Einmündungsstelle ergibt sich eine gegenläufige Strömung des Reduktionsmittels in der Reduktionsmittelleitung 46 im Bezug auf die in Strömungsrichtung 64 strömende Kühlfluidströmung, welche die coaxial zur Reduktionsmittelleitung 46 verlaufende Kühlfluidleitung 50 durchströmt. Die Verwirklichung des Gegenstromprinzips im aktiv gekühlten Anschlussstutzen 44 ermöglicht einen wirkungsvollen Wärmeaustrag aus diesem hohen Temperaturen ausgesetzten Bauteil, sodass unzulässige Temperaturüberschreitungen an kritischen Bauteilen, wie zum Beispiel O-Ringen oder Filterkörpem oder dergleichen, die im Dosiermodul 10 Verwendung finden, vermieden werden können.

Der Vollständigkeit halber sei erwähnt, dass das Dosiermodul 10 gemäß der beiden Ausführungsvarianten in Figur 1 und 2 seitlich eine elektrische Kontaktierung 20 aufweist, welche der elektrischen Kontaktierung des Dosiermodules 10 dient. Wie Figur 2 des Weiteren zeigt, strömt die gerichtete Kühlfluidströmung 34 über den Kühlfluidzulauf 14 dem unteren Kühlkörper 22 zu, kühlt in effektiver Weise die Ventilspitze 18 im unteren Bereich des Dosiermodules 10, bevor das Kühlfluid, unterstützt durch ein Strömungsleitblech 26, in den oberen Kühlkörper 24 überströmt. Im unteren Kühlkörper 22 und im oberen Kühlkörper 24 angeordnete gekühlte Flächen sind mit den Bezugszeichen 28 beziehungsweise 30 bezeichnet. In vorteilhafter Weise ist in der Ausführungsvariante gemäß Figur 2 - im Gegensatz zur Darstellung in Figur 1 - der am Mantel des oberen Kühlkörpers 24 ausgebildete Kühffluidrücklauf 16 leicht nach unten gebogen, sodass eine leichtere Befestigung der Schlauchverbindung 40 auf diesem möglich ist. An dem Einmündungsstutzen 42 ist eine stoffschlüssige Verbindung 58 zwischen dem dort aufgesteckten Ende des Schlauchabschnittes 40 und dem Einmündungsstutzen 42 ausgeführt. Als Alternative zu der stoffschlüssigen Verbindung 58 könnte zwischen dem Einmündungsstutzen 42 und dem Schlauchabschnitt 40 auch eine Schelle/Schlauchverbindung eingesetzt werden, d.h. eine kraftschlüssige Verbindung.

Der Darstellung gemäß Figur 3 ist eine Detaildarstellung des Kunststoffkörpers des aktiv gekühlten Anschlussstutzens zu entnehmen.

Wie Figur 3 zeigt, ist der Kunststoffkörper 52 mit einem Schnappverschluss beziehungsweise einer Verrastung 54 versehen. Dies gestattet eine äußerst einfache Montage des Kunststoffkörpers 52 auf dem oberen Teil des Dosierventiles 36 des Dosiermodules 10. Die Verrastung beziehungsweise der Schnappverschluss 54 hat den Vorteil, dass eine lösbare Verbindung geschaffen wird, die im Servicefall auch leicht demontierbar ist, was bei Verwirklichung einer stoffschlüssigen Verbindung nicht der Fall wäre. Aufgrund der gewählten Befestigungsmöglichkeit des Kunststoffkörpers 52 auf dem Dosierventil 36 kann der Kunststoffkörper 52 in unterschiedlichen Umfangspositionen, die herstellerspezifisch sein können, angebracht werden, sodass auf die Montagemöglichkeiten bestimmenden Bauraumverhältnisse an unterschiedlichen Stellen der Hersteller angepasst werden kann, wodurch eine relativ hohe Flexibilität bei der Montage des erfindungsgemäß vorgeschlagenen Dosiermoduls 10 gewährleistet ist. Um die manuelle Montage des Kunststoffkörpers 52 zu ermöglichen, sind hinter den Rasthaken Freiräume 70 ausgeführt, um eine Auslenkbewegung der Schnappverschlüsse beziehungsweise Verrastungen 54 zu ermöglichen.

Position 76 bezeichnet ein Dichtelement, welches an einem verjüngten Bereich des Dosierventils 36 ausgebildet ist, und im montierten Zustand eine Abdichtung bildend an der Innenwand 78 des Kunststoffkörpers 52 anliegt. Im montierten Zustand ist das ringförmig ausgebildete Abdichtelement 76 verformt und legt sich, die eigentliche Dichtung darstellend, einerseits an der Innenwand 78 des Kunststoffkörpers 52 und andererseits am Hals des Dosierventiles 36 an.

Wie aus der Schnittdarstellung gemäß Figur 3 weiter hervorgeht, verläuft die Reduktionsmittelleitung 46 im Wesentlichen zentrisch im Kunststoffkörper 52. Im Schnitt gemäß Figur 3 ist der Teil der Reduktionsmittelleitung 46 dargestellt, der in vertikaler Richtung nach unten in Richtung auf das Dosierventil 36 zuläuft (vergleiche Darstellung gemäß Figur 1). Figur 3 zeigt, dass in dieser Schnittdarstellung die Kühlfluidleitung 50 koaxial zur Reduktionsmittelleitung 46 verläuft und in dieser Ausführungsvariante die Reduktionsmittelleitung 46 in einem 180°-Bogen 72 teilweise ummantelt Anstelle des in Figur 3 eingezeichneten 180°-Bogens 72, in welchem in dieser Ausführungsvariante der Querschnitt der Kühlfluidzuleitung 50 die Reduktionsmittelleitung 46 umgibt, können auch andere Kreisbögenwerte, so zum Beispiel 270° oder vollständige Umschließung, d.h. 360° Ringquerschnitt gewählt werden. In fertigungstechnischer Hinsicht bietet das Kunststoffspntzgießverfahren hier die größten Freiräume: Je nachdem in welcher Dicke eine Trennfläche 74 zwischen der Reduktionsmittelleitung 46 und der Kühlfluidleitung 50 im aktiv gekühlten Anschlussstutzen 44 gefertigt werden kann, stellt sich der erzielbare Wärmeaustrag aus dem Dosiermodul 10 ein. Begünstigt wird der Wärmeaustrag aus dem Dosiermodul 10 - wie vorstehend schon mehrmals erwähnt - durch die Verwirklichung des Gegenstromprinzips zwischen dem Reduktionsmittel und dem Kühlfluid im aktiv gekühlten Anschlussstutzen 44. Beim Gegenstromprinzip stellen sich besonders gute Wärmeübergänge zwischen den hier in Rede stehenden Fluiden, d.h. dem Reduktionsmittel und dem Kühlfluid, ein. Der Wärmeübergang kann durch eine möglichst dünne Auslegung der Trennfläche 74 verbessert werden, wobei jedoch die mechanische Stabilität zu berücksichtigen ist, da eine Trennung der beiden Fluide, d.h. des Reduktionsmittels und des Kühlfluides unbedingt gewährleistet werden muss.

Durch die vorstehend anhand der Figuren 1 bis 3 erwähnte Lösung können bisher eingesetzte Anschlussstücke durch den erfindungsgemäß vorgeschlagenen aktiv gekühlten Anschlussstutzen 44 ersetzt werden, welches an die Zuführleitung, ausgehend vom Reduktionsmitteltank, angebunden kann, ebenso wie an einen Kühlwasserkreislauf einer Verbrennungskraftmaschine. Um die zur Verfügung stehenden kleinen Bauräume kundenseitig zu berücksichtigen, wird der aktiv gekühlte Anschlussstutzen idealerweise direkt mit den Kühlfluidzuleitungen beziehungsweise Reduktionsmittelzuleitungen stoffschlüssig verbunden, bevorzugt verschweißt Dadurch wird ein zu großer Aufbau, der beispielsweise bei Einsatz von O-Ringen verursacht würde, vermieden, sodass die begrenzten Bauräume Berücksichtigung finden können. Des Weiteren kann durch die erfindungsgemäß vorgeschlagene Lösung erreicht werden, dass ein verbessertes Temperaturverhalten, d.h. eine aktive Kühlung im Betrieb gewährleisten wird und eine erhöhte thermische Masse des Dosiermodules 10 erreicht wird, was insbesondere bei auftretenden "Heißabstellem" von großer Bedeutung für die Lebensdauer der eingesetzten Komponenten sein kann.

## Patentansprüche

1. Dosiermodul (10) zum Eindosieren eines Reduktionsmittels in einen Abgastrakt einer Verbrennungskraftmaschine, wobei das Dosiermodul (10) mindestens einen Kühlkörper (22, 24) umfasst, der von einem Kühlfluid durchströmt ist, **wobei das Dosiermodul (10) einen Anschlussstutzen aufweist, welcher eine Reduktionsmittelleitung (46) umfaßt, dadurch gekennzeichnet, dass die Reduktionsmittelleitung (46) zumindest teilweise von einer Kühlfluidleitung (50) ummantelt ist, so dass der Anschlussstutzen durch das Kühlfluid aktiv gekühlt wird**.

2. Dosiermodul (10) gemäß Anspruch 1, **dadurch gekennzeichnet, dass** der aktiv gekühlte Anschlussstutzen (44) einteilig als Kunststoffspritzgussbauteil ausgebildet oder mehrteilig ausgebildet ist und ein Anschlussrohr (56) und einen Kunststoffkörper (52) umfasst.

3. Dosiermodul (10) gemäß einem der vorhergehenden Ansprüche, **dadurch gekennzeichnet, dass** das Kühlfluid und **das** Reduktionsmittel den aktiv gekühlten Anschlussstutzen (44) im Gegenstromprinzip durchströmen.

4. Dosiermodul (10) gemäß einem der vorhergehenden Ansprüche, **dadurch gekennzeichnet, dass** das Reduktionsmittel durch die Reduktionsmittelleitung (46) einem Dosierventil (46) zuströmt.

5. Dosiermodul (10) gemäß dem vorhergehenden Anspruch, **dadurch gekennzeichnet, dass** das Kühlfluid aus einem der Kühlkörper (22, 24) des Dosiermodules (10) austritt und einer Einmündung (42) in den aktiv gekühlten Anschlussstutzen (44) einströmt und diesen entgegengesetzt zu einer Strömungsrichtung (66) des Reduktionsmittels durchströmt.

6. Dosiermodul (10) **gemäß Anspruch 2, dadurch gekennzeichnet, dass** die Kühlfluidleitung (50), die Reduktionsmittelleitung (46) im Kunststoffkörper in einem Kreisbogen (72) um zumindest 180° umschließt.

7. Dosiermodul (10) **gemäß Anspruch 2, dadurch gekennzeichnet, dass** das Anschlussrohr (56) und der Kunststoffkörper (52) stoffschlüssig miteinander gefügt sind.

8. Dosiermodul (10) gemäß dem vorhergehenden Anspruch, **dadurch gekennzeichnet, dass** stoffschlüssige Fügestellen (58) als umlaufende Schweißnähte ausgeführt sind.

9. Dosiermodul (10) gemäß **Anspruch 5, dadurch gekennzeichnet, dass** ein Kühlfluidrücklauf (16) an einem der Kühlkörper (22, 24) und die Einmündung (42) über eine Schlauchverbindung (40) hydraulisch miteinander verbunden sind.

10. Dosiermodul (10) gemäß **Anspruch 2, dadurch gekennzeichnet, dass** der Kunststoffkörper (52) des Anschlussstutzens (44) eine Verrastungsgeometrie beziehungsweise einen Schnappverschluss (54) aufweist.

11. Dosiermodul (10) gemäß dem vorhergehenden Anspruch, **dadurch gekennzeichnet, dass** der aktiv gekühlte Anschlussstutzen (44) am Dosiermodul (10) in verschiedenen Umfangspositionen am Dosiermodul (10) verrastbar ist.

12. Dosiermodul (10) **gemäß einem der vorhergehenden Ansprüche, dadurch gekennzeichnet, dass** das Kühlfluid das Reduktionsmittel, Kraftstoff oder Kühlflüssigkeit der Verbrennungskraftmaschine ist.

13. Dosiermodul (10) **gemäß Anspruch 9, dadurch gekennzeichnet, dass** das Dosiermodul (10) von einer gerichteten Kühlfluidströmung (34), ausgehend von **einer** Ventilspitze (18), durch den mindestens einen Kühlkörper (22, 24) durch **die** Schlauchverbindung (40) und den aktiv gekühlten Anschlussstutzen (44) durchströmt wird.

14. Dosiermodul (10) gemäß einem der vorhergehenden Ansprüche, **dadurch gekennzeichnet, dass** das Dosiermodul (10) durch **die** Ausbildung eines Kühlfluidmantels im aktiv gekühlten Anschlussstutzen (44) eine höhere Temperaturträgheit aufweist.

15. Dosiermodul (10) gemäß einem der vorhergehenden Ansprüche, **dadurch gekennzeichnet, dass** im Bereich des aktiv gekühlten Anschlussstutzens (44) eine optimierte Kühlung im Heißabstellfall durch Ausnutzung der Verdampfungsenergie beim Sieden des Kühlmittels erhalten wird.

## Claims

1. Metering module (10) for metering a reducing agent into an exhaust gas section of an internal combustion engine, the metering module (10) comprising at least one cooling element (22, 24) which is flowed through by a cooling fluid, wherein the metering module (10) has a connection piece which comprises a reducing agent line (46), **characterized in that** the reducing agent line (46) is encased at least partially by a cooling fluid line (50), so that the connection piece is cooled actively by the cooling fluid.

2. Metering module (10) according to Claim 1, **characterized in that** the actively cooled connection piece (44) is configured in one piece as a plastic injection molded part or is configured in multiple pieces and comprises a connection pipe (56) and a plastic body (52).

3. Metering module (10) according to one of the preceding claims, **characterized in that** the cooling fluid and the reducing agent flow through the actively cooled connection piece (44) in the counterflow principle.

4. Metering module (10) according to one of the preceding claims, **characterized in that** the reducing agent flows through the reducing agent line (46) to a metering valve (46).

5. Metering module (10) according to the preceding claim, **characterized in that** the cooling fluid exits from one of the cooling elements (22, 24) of the metering module (10) and flows into an opening (42) into the actively cooled connection piece (44) and flows through the latter in the opposite direction to a flow direction (66) of the reducing agent.

6. Metering module (10) according to Claim 2, **characterized in that** the cooling fluid line (50) encloses the reducing agent line (46) in the plastic body in a circular arc (72) by at least 180°.

7. Metering module (10) according to Claim 2, **characterized in that** the connection pipe (56) and the plastic body (52) are joined to one another in an integrally bonded manner.

8. Metering module (10) according to the preceding claim, **characterized in that** integrally bonded joining points (58) are configured as circumferential welded seams.

9. Metering module (10) according to Claim 5, **characterized in that** a cooling fluid return (16) on one of the cooling elements (22, 24) and the opening (42) are connected hydraulically to one another via a hose connection (40).

10. Metering module (10) according to Claim 2, **characterized in that** the plastic body (52) of the connection piece (44) has a latching geometry or a snap-action closure (54).

11. Metering module (10) according to the preceding claim, **characterized in that** the actively cooled connection piece (44) can be latched to the metering module (10) in different circumferential positions on the metering module (10).

12. Metering module (10) according to one of the preceding claims, **characterized in that** the cooling fluid is the reducing agent, fuel or cooling liquid of the internal combustion engine.

13. Metering module (10) according to Claim 9, **characterized in that** the metering module (10) is flowed through by a directed cooling fluid flow (34), starting from a valve tip (18), through the at least one cooling element (22, 24) through the hose connection (40) and the actively cooled connection piece (44).

14. Metering module (10) according to one of the preceding claims, **characterized in that** the metering module (10) has a higher thermal inertia as a result of the configuration of a cooling fluid jacket in the actively cooled connection piece (44).

15. Metering module (10) according to one of the preceding claims, **characterized in that** optimized cooling is obtained in the region of the actively cooled connection piece (44) in the hot soak case by way of the utilization of the evaporation energy during boiling of the coolant.

## Revendications

1. Module de dosage (10) pour le dosage d'un agent réducteur dans une ligne d'échappement d'un moteur à combustion interne, le module de dosage (10) comprenant au moins un corps de refroidissement (22, 24) qui est parcouru par un fluide de refroidissement, le module de dosage (10) présentant une tubulure de raccordement qui comprend une conduite d'agent réducteur (46), **caractérisé en ce que** la conduite d'agent réducteur (46) est au moins en partie enveloppée par une conduite de fluide de refroidissement (50), de telle sorte que la tubulure de raccordement soit refroidie activement par le fluide de refroidissement.

2. Module de dosage (10) selon la revendication 1, **caractérisé en ce que** la tubulure de raccordement refroidie activement (44) est réalisée d'une seule pièce sous forme de composant moulé par injection de plastique ou est réalisée en plusieurs pièces et comprend un tube de raccordement (56) et un corps en plastique (52).

3. Module de dosage (10) selon l'une quelconque des revendications précédentes, **caractérisé en ce que** le fluide de refroidissement et l'agent réducteur s'écoulent à travers la tubulure de raccordement refroidie activement (44) selon le principe des contre-courants.

4. Module de dosage (10) selon l'une quelconque des revendications précédentes, **caractérisé en ce que** l'agent réducteur afflue jusqu'à une soupape de dosage (46) à travers la conduite d'agent réducteur (46).

5. Module de dosage (10) selon la revendication précédente, **caractérisé en ce que** le fluide de refroidissement sort de l'un des corps de refroidissement (22, 24) du module de dosage (10) et afflue à une embouchure (42) dans la tubulure de raccordement refroidie activement (44) et traverse celle-ci dans le sens opposé à une direction d'écoulement (66) de l'agent réducteur.

6. Module de dosage (10) selon la revendication 2, **caractérisé en ce que** la conduite de fluide de refroidissement (50) entoure la conduite d'agent réducteur (46) dans le corps en plastique suivant un arc de cercle (72) autour d'au moins 180°.

7. Module de dosage (10) selon la revendication 2, **caractérisé en ce que** le tube de raccordement (56) et le corps en plastique (52) sont assemblés l'un à l'autre par engagement par liaison de matière.

8. Module de dosage (10) selon la revendication précédente, **caractérisé en ce que** les points d'assemblage par engagement par liaison de matière (58) sont réalisés sous forme de joints de soudure périphériques.

9. Module de dosage (10) selon la revendication 5, **caractérisé en ce qu'**un retour de fluide de refroidissement (16) au niveau de l'un des corps de refroidissement (22, 24) et l'embouchure (42) sont connectés l'un à l'autre hydrauliquement par le biais d'une connexion par tuyau flexible (40).

10. Module de dosage (10) selon la revendication 2, **caractérisé en ce que** le corps en plastique (52) de la tubulure de raccordement (44) présente une géométrie d'encliquetage, respectivement une fermeture par encliquetage (54).

11. Module de dosage (10) selon la revendication précédente, **caractérisé en ce que** la tubulure de raccordement refroidie activement (44) peut être encliquetée sur le module de dosage (10) dans différentes positions périphériques sur le module de dosage (10).

12. Module de dosage (10) selon l'une quelconque des revendications précédentes, **caractérisé en ce que** le fluide de refroidissement est l'agent réducteur, du carburant ou du liquide de refroidissement du moteur à combustion interne.

13. Module de dosage (10) selon la revendication 9, **caractérisé en ce que** le module de dosage (10) est parcouru par un écoulement de fluide de refroidissement orienté (34), partant d'un pointeau de soupape (18), à travers l'au moins un corps de refroidissement (22, 24) à travers la connexion par tuyau flexible (40) et la tubulure de raccordement refroidie activement (44).

14. Module de dosage (10) selon l'une quelconque des revendications précédentes, **caractérisé en ce que** le module de dosage (10) présente une résistance à la température plus élevée grâce à la réalisation d'une enveloppe de fluide de refroidissement dans la tubulure de raccordement refroidie activement (44).

15. Module de dosage (10) selon l'une quelconque des revendications précédentes, **caractérisé en ce qu'**un refroidissement optimisé est obtenu dans la région de la tubulure de raccordement refroidie activement (44) dans le cas d'une coupure du chauffage en exploitant l'énergie d'évaporation lors de l'ébullition du réfrigérant.
